(19) Europäisches Patentamt
European Patent Office
Office européen des brevets

(11) Publication number: 0 026 664
B1

(12) # EUROPEAN PATENT SPECIFICATION

(45) Date of publication of patent specification: 26.09.84

(51) Int. Cl.$^3$: B 05 D 7/16

(21) Application number: 80303429.7

(22) Date of filing: 29.09.80

(54) **A process for forming an autodeposited coating and an autodepositing coating composition.**

(30) Priority: 27.09.79 US 79647

(43) Date of publication of application:
08.04.81 Bulletin 81/14

(45) Publication of the grant of the patent:
26.09.84 Bulletin 84/39

(84) Designated Contracting States:
DE FR GB

(56) References cited:
DE-A-2 638 712
FR-A-2 305 477
GB-A-1 532 885
US-A-3 791 431
US-A-3 936 546
US-A-4 012 351
US-A-4 104 424

(73) Proprietor: Amchem Products, Inc. a Corporation organised under the Laws of the State of Delaware United States of America
Brookside Avenue
Ambler Pennsylvania 19002 (US)

(72) Inventor: Hall, Wilbur Sheriden
126 Germantown Pike
Plymouth Meeting Pennsylvania 19462 (US)

(74) Representative: Sanderson, Laurence Andrew et al
Sanderson & Co. European Patent Attorneys 97 High Street
Colchester Essex (GB)

EP 0 026 664 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for forming an autodeposited coating and an autodepositing coating composition, in particular to improved means for maintaining the effectiveness of an autodepositing coating composition.

It is known to provide water-based coating compositions which are effective, without the aid of electricity, in forming on metallic surfaces immersed therein organic coatings that increase in thickness or weight the longer the time the surfaces are immersed in the compositions. (For convenience, a coating formed from such a composition is hereinafter referred to as an "autodeposited coating".) Speaking generally, autodepositing coating compositions which are so effective comprise acidic aqueous coating solutions having dispersed therein particles of an organic material such as resin particles. Autodeposited coatings are formed from such compositions as a result of their ability to attack and dissolve from the metallic surface metal ions in amounts which cause the organic particles to deposit on the surface in a manner such that there is a continuous build-up of organic coating on the surface.

Coatings formed from such compositions are distinctly different from coatings formed by immersing the metallic surfaces in conventional lattices, that is, compositions comprising solid resin particles dispersed in water. The weight or thickness of a coating formed by immersing a metallic surface in a conventional latex is not influenced by the time the surface is immersed in the latex. It is in the main influenced by the amount of resin solids dispersed in the aqueous medium.

Coatings formed from autodepositing coating compositions are also distinctly different from coatings formed from earlier known acidic aqueous coating solutions containing dispersed solid resin particles and relatively high amounts of water soluble corrosion inhibitors, such as compounds containing hexavalent chromium. The use of relatively high amounts of corrosion inhibitors in such solutions deters attack of the matallic surface to an extent such that resinous coatings which grow with time are not obtained. Thus, resinous coatings formed by immersing metallic surfaces in such compositions are like those formed from immersing the metallic surfaces in conventional latices in that they do not grow with time.

The use of autodepositing coating compositions offers a number of advantages. For example, other factors held constant, they can be used to apply thicker organic coatings to metallic surfaces in a relatively short period of time and in a one-step operation. Also, the coating thickness can be controlled by varying the immersion time of the metallic surface in the coating composition. In general, coatings which have improved corrosion resistant properties and aesthetic appearance are obtainable. These are but a few of the advantages which follow from the use of such compositions.

It is known that as autodepositing coating compositions are used continuously to coat metallic surfaces immersed therein, coatings formed from the compositions tend to become thinner, the longer the use. Continued use of the compositions can result in the destabilisation of the compositions as manifested by the tendency of the dispersed solid particles to flocculate, coagulate and/or gel throughout the compositions.

The present invention is directed to maintaining the effectiveness of a composition of the kind which forms autodeposited coatings on a ferrous metal surface as the composition is used in a continuous operation to coat a ferrous metal surface. The term "ferrous" as used herein means iron and alloys of iron.

Autodepositing coating compositions and the use thereof are disclosed in U.S. Patent Specifications Nos. 3,585,084; 3,592,699; 3,776,848; 3,791,431; 3,795,546; 3,829,371; 3,839,097; 3,914,519; 3,936,546; 3,955,532; 3,960,610; 4,012,351; 4,030,945; 4,103,049; 4,104,424; 4,108,817; and 4,186,216. The specifications discussed below disclose various methods for maintaining the effectiveness of autodepositing coating compositions as they are used.

U.S. Patent Specification No. 3,791,431 discloses treating an autodepositing coating composition in a manner such that excessive amounts of metal ions, which tend to build up in the composition as it is used continuously and which cause the composition to become unstable, are removed or converted to an innocuous form, including a soluble chelated form. This specification discloses an autodepositing coating composition which includes an organic coating-forming material, acid, and an oxidizing agent, for example, hydrogen peroxide. (For convenience, this composition is referred to hereafter as "the $H_2O_2$-containing composition".)

Another autodepositing coating composition, and one that is not disclosed specifially in U.S. Patent Specification No. 3,791,431, is disclosed in U.S. Patent Specifications Nos. 4,103,049 and 4,186,219. These specifications disclose an autodepositing coating composition comprising an organic coating-forming material, HF, and dissolved ferric iron. (For convenience, this composition is referred to hereafter as "the ferric iron-containing composition").

One of the differences between the $H_2O_2$-containing and the ferric iron-containing compositions is that the nature of the former is such that metal which is dissolved from the metal substrate is oxidized promptly to a higher valence state. For example, in coating an iron substrate, iron is oxidized initially to ferrous iron which is then oxidized by $H_2O_2$ (or other equivalent oxidizing agent) to the ferric state.

On the other hand, with the ferric iron-containing compositions, there is little or no tendency for the ferrous iron which is dissolved initially from the substrate to be oxidized to the ferric state, and accordingly, ferrous iron tends to build up in concentration in the composition.

U.S. Patent Specification No. 4,186,219 recognises the specific problem of ferrous iron build-up in the ferric iron-containing composition and discloses controlling the ferrous iron build-up by adding to the composition, as needed, hydrogen peroxide which is effective in oxidizing ferrous iron to ferric iron. The ferric iron can then be removed from the composition by precipitation with phosphoric acid, for example, as disclosed in U.S. Patent Specification No. 3,791,431. This combined use of oxidizing agent and phosphoric acid can lead to the formation of ferric phosphate sludge, which should be removed from the composition as excessive quantities accumulate.

We have now found surprisingly that improved means for maintaining the coating effectiveness and the stability of a bath of autodepositing ferric iron-containing coating composition, thereby to prolong the usefulness of the composition, can be provided by the use in the autodepositing coating composition of a defined carboxylic acid which is effective in complexing ferrous iron.

Accordingly, the present invention in one aspect provides a process for forming an autodepositing coating on a ferrous surface, which process comprises contacting the surface with an autodepositing coating composition which contains hydrofluoric acid and ferric iron and which is of the kind wherein ferrous iron is formed in the composition from the dissolution of the ferrous surface and on continued use tends to build up in concentration thereby adversely affecting the performance of the composition characterised in that a carboxylic acid of dissociation constant from $1.5 \times 10^{-5}$ to $1 \times 10^{-3}$ and which is effective in complexing ferrous iron is included in the composition in an amount effective to maintain the coating effectiveness of the composition.

In another aspect, the invention provides an autodepositing coating composition for use in forming an autodeposited coating on a ferrous surface, which composition contains hydrofluoric acid and ferric iron and is of the kind wherein ferrous iron tends to build up in concentration in the composition and adversely to affect the coating capabilities of the composition as it is used continuously to coat ferrous surfaces characterised in that said composition contains a carboxylic acid of dissociation constant from $1.5 \times 10^{-5}$ to $1 \times 10^{-3}$ and which is effective in forming a complex with said ferrous iron in an amount effective to maintain the coating capabilities of the composition.

British Patent Specification No. 1,532,885 discloses applying a coating of a film-forming material to an acid-etchable metal which comprises contacting the metal surface with an aqueous cationic dispersion of the film-forming material, which dispersion contains a metal-etching acid comprising a carboxylic acid which is capable of forming a negatively charged complex in the dispersion with the metal ion obtained by etching the metal, and drying the coating. The Specification, however, is completely silent about autodepositing and does not mention or suggest the use of hydrofluoric acid; in addition, it is unusual in demanding the use of cationic dispersions.

Carboxylic acids particularly effective in complexing ferrous iron in autodepositing coating compositions according to the present invention, as illustrated in the Examples below, have a dissociation constant of from about $1.5 \times 10^{-5}$ to about $1 \times 10^{-3}$.

In preferred form, the present invention provides and uses an autodepositing coating composition prepared from a latex, hydrofluoric acid and a ferric salt, preferably ferric fluoride, preferably together with a carboxylic acid having a dissociation constant of from about $1.5 \times 10^{-5}$ to about $1 \times 10^{-3}$ which is effective in complexing ferrous iron in the composition.

The use of the ferrous complexer according to the present invention avoids or minimizes problems normally encountered as a result of the build-up of ferrous iron in the composition. Examples of such problems include a reduction in the rate of coating formation by the composition, the formation of coatings which have a reduced tendency to resist a water rinse, and coagulation of resin throughout the composition. Compared to the heretofore known method for coping with ferrous iron build-up which involves the formation of ferric phosphate sludge as mentioned above, one of the advantages of the present invention is that the steps of collection and disposal of such sludge can be avoided.

Coating-forming materials which may be used in autodepositing coating compositions according to the invention include resins which are soluble in the composition or which are capable of being dispersed therein in the form of solid particles or in emulsified form. The use of dispersed resin particles, most preferably supplied in the form of a latex, is preferred. Examples of resins that may be used are polyethylene, polyacrylics and styrene-butadiene copolymers. In addition, epoxy resins may be used. For example, epoxy resins, for example, EPON resins, products of Shell Chemical Co., may be emulsified with toluene to produce a water-emulsified epoxy resin. Particularly useful latices comprise styrene-butadiene latices sold under the trademark DAREX, by W. R. Grace & Co.

The amount of resin utilised may vary over a wide range. The lower concentration limit is dictated by the amount of resin needed to provide sufficient material to form a coating. The upper limit is dictated by the amount of

material that can be dispersed, dissolved or emulsified in the coating composition. The composition may comprise from about 5 to about 550 g/l, preferably from about 100 to about 300 g/l of resin.

The preferred autodepositing coating composition has a pH of from about 1.6 to about 5. The preferred amount of hydrofluoric acid is from about 0.2 to about 5 g/l of composition. The hydrofluoric acid has the advantage that its anion complexes with ferric iron.

The preferred autodepositing coating composition is prepared from a soluble ferric salt, for example, ferric nitrate or ferric chloride, but most preferably ferric fluoride. The preferred make-up concentration of ferric iron in the composition is from about 0.5 to about 5 g/l. It is possible also to establish the initial concentration of ferric iron *in situ* by including in the composition an oxidizing agent, for example, hydrogen peroxide which is capable of oxidizing ferrous iron dissolved from the iron substrate to the ferric form, and in the desired operative amount.

As in the preferred autodepositing coating composition is used, it is believed that ferrous iron is formed as follows:

$$Fo^0 + 2H^+ \rightarrow Fe^{++} + H_2\uparrow$$

$$Fe^0 + 2FeF_3 \rightarrow 3Fe^{++} + 6F^-$$

In the above equations, the $Fe^0$ is the ferrous substrate being coated, the $H^+$ is from the dissociation of HF, and the $FeF_3$, which functions as the bath activator, is initially added as a ferric salt as noted above. Inasmuch as there are no constituents in the composition which oxidize the ferrous iron to ferric iron, there is a build-up of ferrous iron in the composition. Although ferrous iron generated from the substrate plays a necessary role in the formation of the coating as resin is destabilised in the region of the substrate, if excessive amounts of ferrous iron are allowed to accumulate in the composition, the problems referred to above can be encountered.

The redox potential or oxidizing strength of the composition tends to decrease as the ferric/ferrous ratio decreases. Therefore, the coating rate tends to decrease as the ferrous iron concentration increases. Thus, to maintain the coating rate, the concentration of ferrous ion should be reduced.

In accordance with the present invention, the concentration of ferrous iron can be controlled by adding to the autodepositing coating composition one or more carboxylic acids of the defined dissociation constant which are effective in forming a ferrous iron complex. Useful such carboxylic acids include, for example, succinic, citric, itaconic, malic, lactic, gallic, tartaric, fumaric, glacial acrylic and acetic. The preferred carboxylic acid is citric acid. The carboxylic acid should be used in an amount sufficient to complex enough ferrous iron to maintain the effectiveness of the composition.

As is typically the case in autodeposition, there are many factors which have an influence on the numerical value at which the concentration of the ferrous iron should be maintained, and accordingly, it is recommended that for any particular process, empirical determinations be made as to the value or range of values within which the concentration should be maintained. This will govern the amount of carboxylic acid complexer to use, which amount can vary for a particular application, depending on the particular acid selected for use. For guideline purposes, it is recommended that there may be added to the composition from about 0.5 to about 10 g/l of the carboxylic acid complexer. The complexer may be added to the composition periodically or continuously.

The addition of a ferrous iron complexer to a bath of autodepositing coating composition permits the bath to be operated for a longer period of time without having to add an oxidizing agent, for example, hydrogen peroxide, which is capable of oxidizing ferrous iron to ferric iron. (Another advantage of the present invention is that the ferrous iron complexer is not consumed, as is hydrogen peroxide, in converting the ferrous iron to its innocuous state.) However, although not required, hydrogen peroxide may be added to the bath to oxidize some ferrous iron to ferric iron. This frees some of the ferrous iron complexer to complex ferrous iron not complexed while forming, *in situ*, ferric iron which is one of the essential constituents of the bath. With continued use of the bath, the ferrous iron complexer will be depleted eventually through drag-out, but at a rate that is very slow relative to the consumption of an oxidizing agent, as used in the prior art method described above.

As mentioned above, ferric iron is an essential constituent of the bath. As ferrous substrates are coated, ferric iron is consumed. Other factors held constant, the lower the concentration of ferric iron, the lower the rate of dissolution of the substrate, and the slower the rate of coating formation. The concentration of ferric iron can be increased by forming it *in situ* as described above, that is, by use of an oxidizing agent to oxidize ferrous iron or by adding additional ferric-containing material to the composition.

A method of monitoring the decrease in ferric iron concentration or increase in uncomplexed ferrous iron concentration is by measuring the redox potential of the composition. Any suitable instrument which is capable of measuring a difference in potential in millivolts can be used. For example, a potentiometer having a calomel cell, or other suitable reference cell, and a platinum electrode can be used. The electrodes are contacted with the composition and the electrical potential between the two electrodes is measured. In the use of such an apparatus, it

may be observed that as the composition is used and the concentration of ferric iron decreases, the millivolt reading of the instrument tends to fall. Accordingly, for any particular application, the millivolt reading can be related to the point at which coatings of unsuitable thickness are formed. In effect, the millivolt reading range of a satisfactory operating composition can be determined and steps taken to maintain the millivolt reading within the desired range. As the ferrous iron concentration decreases, the millivolt reading increases.

A decrease in the coating rate, once observed may be reversed either by adding more ferric iron in the form of a ferric salt, such as noted above, or by generating more ferric iron *in situ* by the addition of an amount of oxidizing agent, such as hydrogen peroxide, effective to oxidize sufficient ferrous iron to restore the ferric iron to its desired concentration. The addition of oxidizing agent restores the ferric iron concentration to the desired level, removes ferrous iron from the bath through oxidation to ferric iron, and regenerates the ferrous complexer.

In various applications, it will be found that the ferric iron concentration does not rapidly decrease during continuous use of the composition, and therefore, the addition of a ferric salt or generation of ferric iron *in situ* by use of an oxidizer will not be required frequently. Hydrogen peroxide is the preferred oxidizing agent since it rapidly oxidizes ferrous iron to ferric iron and forms water, a constituent of the composition.

The present invention may be used with autodepositing baths operated in the usual way. For example, the bath may be operated at room temperature and may be maintained at a temperature of from about 20°C to about 40°C. Contact times between the substrates and the composition may be from about 15 seconds to about 10 minutes, preferably from about 30 seconds to about 5 minutes, and may be accomplished conveniently by immersion. Other ingredients may be included in minor amounts in the compositions. For example, coalescing agents (e.g. ethylene glycol monobutyl ether) and pigments (e.g. titanium dioxide and carbon black) may be included. Exemplary amounts of optional ingredients range from about 1 g/l or less to about 100 g/l, or more, depending upon the nature of the ingredients and the particular composition used.

After contact with the coating composition, the coated metallic surface may be subjected to further processing steps, as are known. Such steps are described briefly hereafter. Water rinsing the coated surface after it has been withdrawn from the composition, and before significant drying takes place, is effective in removing therefrom residuals such as acid and other ingredients of the bath that adhere to the coated surface. Following any rinse steps employed after the coated surface is withdrawn from the composition, the coating should be dried. Fusion of the resinous coating renders it continuous, thereby improving its resistance to corrosion and adherence to the underlying metallic surface. The conditions under which the drying and/or fusion operation is carried out depend somewhat upon the type of resin employed. In general, heat will be required to fuse the resin. As is known, certain types of coating-forming materials, for example epoxy resins, should be cross-linked or cured.

The following Examples serve to illustrate, but not to limit, the present invention.

Example 1

The suitability as ferrous complexers of several carboxylic acids was evaluated as follows:

(1) DAREX 637 styrene-butadiene latex was diluted to 10 percent weight/volume solids. Aliquots of 100 ml each were placed in 15 glass jars.

(2) To each jar containing the above latex was added 0.5 gram of a carboxylic acid dissolved in 10 ml of water. The carboxylic acids used are given in Table 1 below.

(3) A coagulating solution was prepared by dissolving 25 grams of $FeSO_4 \cdot 7H_2O$ in water and diluting to 1 litre. Ten ml of this solution were added to each glass jar.

(4) Each of the latex solutions containing a carboxylic acid and coagulant was allowed to stand for 72 hours. No coagulation was apparent to the naked eye for any solution containing a carboxylic acid. A control, containing only latex and coagulant and no carboxylic acid, coagulated almost immediately.

(5) Another 10 ml of $FeSO_4 \cdot 7H_2O$ coagulant were added to each glass jar. After several hours, no coagulation was yet apparent to the naked eye. Microscopic examinations of the solutions at 100× then were made. Also the behaviour of each of the solutions was visually observed upon filtration through "qualitative" filter paper. The results are presented in Table 1 below.

TABLE 1

Solutions Containing Latex[1], Coagulant[2] and Specified Carboxylic Acid

| Carboxylic Acid | Dissociation Constant | Microscopic Examination | Filtration |
|---|---|---|---|
| None[3] | — | Coagulation | Coagulated |
| Succinic | $6.4 \times 10^{-5}$ | Excellent | Excellent |
| Itaconic | $1.5 \times 10^{-5}$ | Excellent | Excellent |
| Gallic | $4 \times 10^{-5}$ | Excellent | Excellent |
| Lactic | $1.4 \times 10^{-4}$ | Moderate Flocculation | Excellent |
| Tartaric | $9.6 \times 10^{-4}$ | Excellent | Excellent |
| Malonic | $1.4 \times 10^{-3}$ | Slight Flocculation | Blinds Very Slowly |
| Malic | $4 \times 10^{-4}$ | Excellent | Excellent |
| Diglycolic | $1.1 \times 10^{-3}$ | Grainy | Blinds Very Slowly |
| Fumaric | $9.3 \times 10^{-4}$ | Excellent | Excellent |
| Citric | $8.7 \times 10^{-4}$ | Excellent | Excellent |
| Glacial Acrylic | $5.5 \times 10^{-5}$ | Excellent | Excellent |
| Acetic | $1.8 \times 10^{-5}$ | Excellent | Excellent |
| Maleic | $1 \times 10^{-2}$ | Flocculation | Blinds Quickly |

(1) DAREX 637
(2) $FeSo_4 \cdot 7H_2O$
(3) Control run

The results reported in Table 1 above indicate that the following acids are effective as ferrous complexers in a latex composition: succinic, itaconic, gallic, lactic, tartaric, malic, fumaric, citric, glacial acrylic and acetic acids. The following carboxylic acids (having the relatively high dissociation constants noted in Table 1) were not effective as ferrous complexers: malonic, maleic and diglycolic acids. Under similar conditions, mineral acids such as sulphuric, hydrochloric and nitric acids, were found to be ineffective as ferrous complexers in that latex destabilisation occurred rapidly.

## Example 2

Autodepositing coating compositions were prepared as follows: 180 grams of DAREX 637 latex and 5 grams of AQUABLAK 115 aqueous pigment dispersion (a carbon black pigment, product of Borden Chemical Co.) were placed in a 1 litre polyethylene beaker and the resulting mixture was diluted to a volume of 950 ml. Fifty ml of a solution containing 3 grams of ferric fluoride and 2.3 grams of HF were added to the mixture to make 1 litre of coating composition.

To 1 litre of the above composition, 5 grams of citric acid were added. Unpolished cold-rolled steel Q-panels (3″ x 4″ [7.6 x 10.2 cm]) were immersed for 90 seconds in this composition. A total of 6 square feet (0.5 $m^2$) of Q-panel was coated, after which it was found that the citric acid-containing composition had a 50% greater redox potential (155 versus 103) and provided a coating having approximately a 20% greater film thickness (0.95 mil (0.024 mm) versus 0.80 mil (0.020 mm)), as compared to the use of a control composition containing identical ingredients, but without citric acid.

## Example 3

A composition identical to that of Example 2, except that (a) no pigment was used and (b) 5 grams of fumaric acid were substituted for the 5 grams of citric acid, was prepared. Q-panels (3″ x 4″ [7.6 x 10.2 cm] unpolished, cold-rolled steel) were immersed for 90 seconds in the composition. A total of 12 square feet (1 $m^2$) of panel were coated before hydrogen peroxide addition became necessary to maintain the rate of coating formation. This represents a doubling

of square footage of panel coated as compared to a control composition without fumaric acid. With periodic replenishment and peroxide addition, a total of 40 square feet (3.7 $m^2$) of Q-panel were coated using the fumaric acid-containing composition, which represents a complete bath "turn-over".

## Claims

1. A process for forming an autodeposited coating on a ferrous surface, which process comprises contacting the surface with an autodepositing coating composition which contains hydrofluoric acid and ferric iron and which is of the kind wherein ferrous iron is formed in the composition from the dissolution of the ferrous surface and on continued use tends to build up in concentration thereby adversely affecting the performance of the composition characterised in that a carboxylic acid of dissociation constant from $1.5 \times 10^{-5}$ to $1 \times 10^{-3}$ and which is effective in complexing ferrous iron is included in the composition in an amount effective to maintain the coating effectiveness of the composition.

2. A process according to claim 1 characterised in that the carboxylic acid is succinic, citric, itaconic, malic, lactic, tartaric, fumaric, gallic, glacial acrylic, or acetic acid or a mixture of two or more of these acids.

3. A process according to claim 2 characterised in that the acid is citric acid.

4. A process according to any one of the preceding claims characterised in that the composition contains solid resin particles.

5. A process according to any one of the preceding claims characterised in that the ferric iron is supplied to the composition as soluble ferric salt.

6. A process according to claim 5 characterised in that the ferric salt is ferric fluoride.

7. A process according to any one of the preceding claims characterised in that the carboxylic acid is added to the composition in an amount of from 0.5 to 10 g/l.

8. A process according to any one of the preceding claims characterised in that an oxidizing agent which is effective in oxidizing some of the ferrous iron to ferric iron is added to the coating composition.

9. An autodepositing coating composition for use in forming an autodeposited coating on a ferrous surface, which composition contains hydrofluoric acid and ferric iron and is of the kind wherein ferrous iron tends to build up in concentration in the composition and adversely to affect the coating capabilities of the composition as it is used continuously to coat ferrous surfaces characterised in that said composition contains a carboxylic acid of dissociation constant from $1.5 \times 10^{-5}$ to $1 \times 10^{-3}$ and which is effective in forming a complex with said ferrous iron in an amount effective to maintain the coating capabilities of the composition.

10. A composition according to claim 9 characterised in that it contains dispersed solid resin particles.

11. A composition according to claim 9 or 10 characterised in that the carboxylic acid is succinic, citric, itaconic, malic, lactic, tartaric, fumaric, glacial acrylic, gallic or acetic acid or a mixture of two or more of these acids.

12. A composition according to claim 11 characterised in that the carboxylic acid is citric acid.

13. A composition according to any one of claims 9 to 12 characterised in that the ferric iron has been supplied to the composition as soluble ferric salt.

14. A composition according to any one of claims 9 to 13 characterised in that the carboxylic acid is present in an amount of from 0.5 to 10 g/l.

## Revendications

1. Procédé pour former un revêtement par autodisposition sur une surface ferreuse, ce procédé comprenant la mise en contact de la surface avec une composition de revêtement s'autodéposant qui contient de l'acide fluorhydrique et du fer ferrique et qui est du type dans lequel le fer ferreux est formé dans la composition à partir de la dissolution de la surface ferreuse et un utilisation continue tend à se former avec une concentration croissante, affectant par là de façon défavorable la performance de la composition, caractérisé en ce que l'acide carboxylique ayant une constante de dissociation de $1,5 \times 10^{-5}$ à $1 \times 10^{-3}$ et qui est efficace pour complexer le fer ferreux est inclus dans la composition en une quantité efficace pour maintenir l'efficacité de revêtement de la composition.

2. Procédé selon la revendication 1, caractérisé en ce que l'acide carboxylique est de l'acide succinique, citrique, itaconique, malique, lactique, tartrique, fumarique, gallique, acrylique ou acétique glacial, ou un mélange de deux ou plusieurs de ces acides.

3. Procédé selon la revendication 2, caractérisé en ce que l'acide est de l'acide citrique.

4. Procédé selon l'une quelconque des revendications précédentes, caractérisé en ce que la composition contient des particules de résine solides.

5. Procédé selon l'une quelconque des revendications précédentes, caractérisé en ce que le fer ferrique est fourni à la composition sous forme de sel ferrique soluble.

6. Procédé selon la revendication 5, caractérisé en ce que le sel ferrique est du fluorure ferrique.

7. Procédé selon l'une quelconque des revendications précédentes, caractérisé en ce que l'acide carboxylique est ajouté à la composition en une quantité de 0,5 à 10 g/l.

8. Procédé selon l'une quelconque des

revendications précédentes, caractérisé en ce que l'agent oxydant qui est efficace pour oxyder une partie du fer ferreux en fer ferrique est ajouté à la composition de revêtement.

9. Composition de revêtement s'auto-déposant utilisable pour former un revêtement par autodéposition sur une surface ferreuse, cette composition contenant de l'acide fluorhydrique et du fer ferrique et est du type dans lequel le fer ferreux tend à se former en concentration croissante dans la composition et à affecter de façon défavorable les propriétés de revêtement de la composition lorsqu'il est utilisé en continu pour revêtir des surfaces ferreuses, caractérisée en ce que ladite composition contient de l'acide carboxylique ayant une constante de dissociation de $1{,}5 \times 10^{-5}$ à $1 \times 10^{-3}$ et qui est efficace pour former un complexe avec ledit fer ferreux en une quantité efficace pour maintenir les propriétés de revêtement de la composition.

10. Composition selon la revendication 9, caractérisée en ce qu'elle contient des particules de résine solides dispersées.

11. Composition selon la revendication 9 ou 10, caractérisée en ce que l'acide carboxylique est de l'acide succinique, citrique, itaconique, malique, lactique, tartrique, fumarique, acrylique glacial, gallique ou acétique, ou un mélange de deux ou plusieurs de ces acides.

12. Composition selon la revendication 11, caractérisée en ce que l'acide carboxylique est de l'acide citrique.

13. Composition selon l'une quelconque des revendications 9 à 12, caractérisée en ce que le fer ferrique a été fourni à la composition sous forme de sel ferrique soluble.

14. Composition selon l'une quelconque des revendications 9 à 13, caractérisée en ce que l'acide carboxylique est présent en une quantité de 0,5 à 10 g/l.

## Patentansprüche

1. Verfahren zur Bildung eines Selbstabscheidungsüberzuges auf einer eisenhaltigen Oberfläche, wobei die Oberfläche mit einer Selbstabscheidungs-Überzugszusammensetzung in Berührung gebracht wird, die Fluorwasserstoffsäure und Eisen-III enthält und die von der Art ist, daß aufgrund der Auflösung der einsenhaltigen Oberfläche Eisen-II in der Zusammensetzung gebildet wird, welches bei fortgesetzter Verwendung zu einer solchen Konzentrationssteigerung neigt, daß die Wirksamkeit der Zusammensetzung beeinträchtigt wird, dadurch gekennzeichnet, daß die Zusammensetzung eine Carbonsäure mit einer Dissoziationskonstanten von $1{,}5 \times 10^{-5}$ bis $1 \times 10^{-3}$, die wirksam ist um das Eisen-II zu komplexieren in einer Menge enthält, die wirksam ist zur Aufrechterhaltung der Überzugswirksamkeit der Zusammensetzung.

2. Verfahren gemäß Anspruch 1, dadurch gekennzeichnet, daß die Carbonsäure Bernsteinsäure, Zitronensäure, Itakonsäure, Apfelsäure, Milchsäure, Weinsäure, Fumarsäure, Gallussäure, glaciale Acrylsäure oder Essigsäure oder eine Mischung von zwei oder mehreren dieser Säuren ist.

3. Verfahren gemäß Anspruch 1, dadurch gekennzeichnet, daß die Säure Zitronensäure ist.

4. Verfahren gemäß einem der vorgehenden Ansprüche, dadurch gekennzeichnet, daß die Zusammensetzung feste Harzpartikel enthält.

5. Verfahren gamäß einem der vorgehenden Ansprüche, dadurch gekennzeichnung, daß das Eisen-III der Zusammensetzung zugeführt wird in Form eines löslichen Ferrisalzes.

6. Verfahren gemäß Anspruch 5, dadurch gekennzeichnet, daß das Ferrisalz Ferrifluorid ist.

7. Verfahren gemäß einem der vorgehenden Ansprüche, dadurch gekennzeichnet, daß die Carbonsäure der Zusammensetzung in einer Menge von 0,5 bis 10 g/l zugesetzt wird.

8. Verfahren gemäß einem der vorgehenden Ansprüche, dadurch gekennzeichnet, daß ein Oxidationsmittel, welches etwas von Eisen-II zu Eisen-III zu oxidieren vermag, der Überzugszusammensetzung zugesetzt wird.

9. Eine Selbstabscheidungs-Überzugszusammensetzung zur Verwendung bei der Ausbildung eines Selbstabscheidungsüberzuges auf einer eisenhaltigen Oberfläche, die Fluorwasserstoffsäure und Eisen-III enthält und von der Art ist, bei der die Neigung besteht, daß eine Konzentration an Eisen-II sich in der Zusammensetzung aufbaut, die bei kontinuierlicher Verwendung zum Überziehen eisenhaltiger Oberflächen die Überzugsfähigkeit der Zusammensetzung beeinträchtigt, dadurch gekennzeichnet, daß die Zusammensetzung eine Carbonsäure mit einer Dissoziationskonstanten von $1{,}5 \times 10^{-5}$ bis $1 \times 10^{-3}$, die mit dem Eisen-II einen Komplex zu bilden vermag in einer zur Aufrechterhaltung der Überzugsfähigkeit der Zusammensetzung wirksamen Menge enthält.

10. Zusammensetzung gemäß Anspruch 9, dadurch gekennzeichnet, daß sie dispergierte feste Harzteilchen enthält.

11. Zusammensetzung gemäß Anspruch 9 oder 10, dadurch gekennzeichnet, daß die Carbonsäure Bernsteinsäure, Zitronensäure, Itakonsäure, Apfelsäure, Milchsäure, Weinsäure, Fumarsäure, glaciale Acrylsäure, Gallussäure oder Essigsäure oder eine Mischung von 2 oder mehreren dieser Säuren ist.

12. Eine Zusammensetzung gemäß Anspruch 11, dadurch gekennzeichnet, daß die Carbonsäure Zitronensäure ist.

13. Eine Zusammensetzung gemäß einem der Anspruch 9 bis 12, dadurch gekennzeichnet, daß das Eisen-III der Zusammensetzung als lösliches Ferrisalz zugeführt worden ist.

14. Eine Zusammensetzung gemäß einem der Ansprüche 9 bis 13, dadurch gekennzeichnet, daß die Carbonsäure anwesend ist in einer Menge von 0,5 bis 10 g/l.